# EUROPÄISCHE PATENTSCHRIFT

(11) **EP 4 377 114 B1**
(45) Veröffentlichungstag und Bekanntmachung des Hinweises auf die Patenterteilung: **23.04.2025**
(21) Anmeldenummer: 22727053.5
(22) Anmeldetag: 30.04.2022
(51) Int. Cl.: B60K 5/12

(54) **PENDELSTÜTZE MIT AXIALEM LAGERELEMENT**
TORQUE ROD WITH AXIAL BEARING ELEMENT
BIELLETTE DE SUSPENSION AVEC ÉLÉMENT DE PALIER AXIAL

(30) Priorität: 29.07.2021 DE 102021119796
(43) Veröffentlichungstag der Anmeldung: 05.06.2024
(73) Patentinhaber: BOGE Elastmetall GmbH, 49401 Damme (DE)
(72) Erfinder: SCHARF, Jörg, 65558 Eppenrod (DE)
(74) Vertreter: Bossmeyer, Jörg Peter
(86) Internationale Anmeldenummer: PCT/EP2022/061640
(87) Internationale Veröffentlichungsnummer: WO 2023/006266

(56) Entgegenhaltungen:
- FR-A3- 3 019 603
- US-A1- 2012 056 395
- US-A1- 2015 204 406
- US-A1- 2018 105 028

## Beschreibung

Die Erfindung betrifft eine Pendelstütze. Sie bezieht sich auf eine Pendelstütze, welche zumindest im Bereich einer ihrer axialen Enden mindestens ein sich in der Richtung der Längserstreckung des Stützarms der Pendelstütze erstreckendes elastisches Lagerelement aufweist, welches als elastomere Axialfeder wirkt.

Bei Pendelstützen, welche auch als Koppelstangen bezeichnet werden, handelt es sich um zumeist strang- oder stabförmige, im Allgemeinen metallische Profilelemente, mittels welcher Bauelemente und/oder Baugruppen so miteinander gekoppelt werden, dass sie Relativbewegungen zueinander ausführen können. Sie werden insbesondere im Fahrzeugbau und hier beispielsweise zur Kopplung von Teilen des Fahrwerks oder zur elastischen Verbindung von Motor und Getriebe mit dem Fahrzeugchassis verwendet.

Zum Zweck der elastischen, das heißt beweglichen Kopplung weisen die Pendelstützen üblicherweise an zwei axialen Enden jeweils ein elastisches, im Allgemeinen aus Gummi bestehendes Lagerelement auf. Im Zusammenhang mit einer Kopplung zwischen dem Chassis eines Fahrzeugs einerseits und dessen Motor und Getriebe andererseits ist es aus dem Stand der Technik bekannt, ein chassisseitiges Lagerelement der Pendelstütze als ein sich mit seiner Lagerachse in axialer Richtung, nämlich in Richtung der Längserstreckung des einen Stützarm der Pendelstütze ausbildenden Profilelements, erstreckendes Gummielement auszubilden. Das insoweit axiale Lagerelement (Axiallager) dient hierbei insbesondere zur Dämpfung mechanischer, durch den Motor verursachter Schwingungen und zur akustischen Entkopplung der Fahrzeugkarosserie gegenüber dem Motor.

Dieses axiale Lagerelement in der Form einer Buchse ist auf einen hohlzylindrischen Endabschnitt des Stützarms der Pendelstütze aufgeschoben und mittels einer durch den hohlzylindrischen Abschnitt geführten Schraube am Stützarm befestigt. Die vorgenannte Schraube ist dabei unter Ausbildung einer kraftschlüssigen Verbindung zwischen dem elastomeren Lagerelement und dem Stützarm eingeschraubt in eine Gewindebohrung des Stützarms, welche in einem sich an den hohlzylindrischen Abschnitt anschließenden Abschnitt des Stützarms der Pendelstütze ausgebildet ist, oder in eine Mutter, welche in eine Ausnehmung dieses angrenzenden Abschnitts des Lagerarms eingefügt wird. Zwischen dem Schraubenkopf und dem auf den hohlzylindrischen Abschnitt aufgeschobenen Lagerelement, bei welchem es sich demnach hinsichtlich seiner Bauform um ein Axiallager handelt, ist zudem ein scheibenförmiges Element als Anschlagscheibe für das elastische Lagerelement angeordnet.

Über ein Befestigungselement, welches an einem das axiale Lagerelement umgebenden Lagergehäuse oder durch dieses Lagergehäuse selbst ausgebildet ist, ist die Koppelstange an ihrem mit dem axialen Lagerelement ausgestatteten axialen Ende mit dem Fahrzeugchassis verbindbar. Aufgrund seiner Wirkung einer Entkopplung des Fahrzeugchassis gegenüber mechanischen und akustischen Schwingungen wird das an dem betreffenden Ende der Pendelstütze ausgebildete buchsenförmige Lagerelement auch als Komfortbuchse bezeichnet. Eine in der zuvor beschriebenen Weise ausgebildete und verwendete Pendelstütze wird beispielsweise durch die DE 197 31 128 C2 beschrieben.

Ein Nachteil in der zuvor beschriebenen Weise ausgebildeter Pendelstützen besteht darin, dass zur Fixierung des axialen Lagerelements eine vergleichsweise schwere Schraube verwendet wird. Alternativ ist auch eine Nietverbindung oder eine allgemein vergleichbare Befestigungsart möglich. Um den hohlzylindrischen Abschnitt zu erzeugen, durch welchen diese Schraube oder Niet hindurchgeführt wird, um sie zur Befestigung des Lagerelements in den Stützarm einzuschrauben, wird der Stützarm üblicherweise in einem Kokillengussverfahren hergestellt. Nach der Formgebung ist dabei eine Nachbearbeitung des Profilelements erforderlich, wobei insbesondere auch die mit der Schraube in Eingriff zu bringende Gewindebohrung in dem Stützarm ausgebildet werden muss. Das Vorhalten geeigneter Gewindebohrungen in der Konstruktion und entsprechender Mittel, insbesondere der Werkzeuge zur Erzeugung der Gewindebohrung, gilt jedoch im Hinblick auf den sehr stark kostenoptimierten Fahrzeugbau als vergleichsweise teuer. Auch das durch die Metallschraube verursachte relativ hohe Gewicht einer solchermaßen ausgebildeten Pendelstütze stellt letztlich unter dem Gesichtspunkt des Energieverbrauchs, also des Kraftstoffverbrauchs bei Fahrzeugen mit einer Brennkraftmaschine, einen Kostenfaktor dar. Schließlich ist noch darauf hinzuweisen, dass im Zusammenhang mit einer Verwendung in künftig vermehrt hergestellten Elektrofahrzeugen gewissermaßen jedes zusätzliche Gramm Gewicht im Hinblick auf das vieldiskutierte Thema der Reichweite solcher Fahrzeuge als nachteilig anzusehen ist.

Neben der zuvor beschriebenen Ausbildungsform einer Pendelstütze mit einem axialen Lagerelement, das heißt einem Axiallager als Komfortbuchse oder Komfortlager sind auch Ausbildungsformen bekannt, bei denen das Komfortlager durch das axial endseitige Ende des Stützarms, nämlich durch ein an diesem Ende ausgebildetes Auge, eingefasst ist. Hierbei ist das Komfortlager als Radiallager ausgebildet, welches bezogen auf den Stützarm der Pendelstütze bei deren bestimmungsgemäßen Einbau ebenfalls eine axiale Dämpfung bewirkt, aus der Sicht des Lagers betrachtet aber in radialer Richtung belastet wird. Nachteilig bei solchen Pendelstützen mit einem umfassten und somit nicht direkt mit dem Stützarm verbundenen Komfortlager ist es, dass für den Stützarm erheblich mehr Material benötigt wird, um sicherzustellen, dass die Pendelstütze die hohen durch die Hebelwirkung verursachten Kräfte aufnehmen kann und es nicht zu einer Überbelastung des durch diese Kräfte gewissermaßen langgezogenen Auges kommt. Auch dies geht demnach in nachteiliger Weise mit einem erhöhten Gewicht der Pendelstütze einher.

Eine weitere Pendelstütze ist aus der US 2018/105028 A1 bekannt.

Aufgabe der Erfindung ist es insbesondere, die zuvor genannten Nachteile zu vermeiden. Hierzu soll z.B. eine hinsichtlich der Befestigung eines axialen Lagerelements an dem Stützarm sowie eine hinsichtlich ihrer Verbindung mit anderen Bauteilen oder Baugruppen alternative Ausbildungsform für eine Pendelstütze bereitgestellt werden.

Diese Aufgabe wird durch eine Pendelstütze mit den Merkmalen des Patentanspruchs 1 gelöst. Vorteilhafte Aus- und/oder Weiterbildungen der Erfindung sind durch die Unteransprüche und in der nachfolgenden Beschreibung gegeben.

Eine Pendelstütze mit einem durch ein Profilelement ausgebildeten, sich in einer seiner Längserstreckung entsprechenden axialen Richtung zwischen zwei axialen Enden erstreckenden Stützarm, der an wenigstens einem axialen Ende einen sich an einen Absatz anschließenden Abschnitt mit reduzierter Querschnittsfläche aufweist, auf den mindestens ein, sich in der axialen Richtung zwischen zwei Anschlagflächen erstreckendes elastisches Lagerelement aufgeschoben ist, wobei an dem Absatz eine, vorzugsweise erste, Anschlagfläche und durch ein, auf der dem Absatz axial gegenüberliegenden Seite des querschnittsreduzierten Abschnitts angeordnetes scheibenförmiges Metallelement eine Anschlagscheibe mit einer, vorzugsweise weiteren, Anschlagfläche ausgebildet ist, ist erfindungsgemäß insbesondere dadurch weitergebildet, dass der Stützarm in seinem querschnittsreduzierten Abschnitt eine nicht rotationssymmetrische Querschnittsfläche aufweist und dass die Anschlagscheibe unmittelbar an dem querschnittsreduzierten Abschnitt befestigt oder an diesem mit Hilfe unmittelbar an dem Abschnitt befestigter Mittel in der axialen Richtung festgelegt ist.

Die zur Lösung der Aufgabe vorgeschlagene Pendelstütze besteht insbesondere aus dem oder einem den oder einen Stützarm ausbildenden Profilelement, welches sich in seiner Längserstreckung zwischen zwei axialen Enden erstreckt. Beispielsweise entspricht das Profilelement dem Stützarm. An seinen beiden axialen Enden weist der Stützarm bevorzugt jeweils mindestens ein elastisches Lagerelement auf. Der, vorzugsweise metallische, Stützarm weist an wenigstens einem axialen Ende den oder einen sich an dem oder einen Absatz anschließenden Abschnitt mit reduzierter Querschnittsfläche auf. Auf den letztgenannten Abschnitt, welcher in der Beschreibung und in den Patentansprüchen insbesondere auch als querschnittsreduzierter Abschnitt bezeichnet wird, ist bevorzugt mindestens ein, sich vorzugsweise in der axialen Richtung zwischen zwei Anschlagflächen erstreckendes, elastisches Lagerelement (Axiallager) aufgeschoben.

Für das oder für ein sich axial erstreckendes Lagerelement sind bevorzugt an dem Absatz, insbesondere im Übergangsbereich zu dem querschnittsreduzierten Abschnitt, die oder eine, vorzugsweise erste, Anschlagfläche ausgebildet und durch die oder eine Anschlagscheibe, nämlich durch das oder ein auf der dem Absatz axial gegenüberliegenden Seite des querschnittsreduzierten Abschnitts angeordnetes scheibenförmiges Metallelement, die oder eine, vorzugsweise weitere, Anschlagfläche ausgebildet. Beispielsweise entspricht das Metallelement der Anschlagscheibe. Im Hinblick auf die vorstehend verwendete Formulierung, wonach eine Anschlagfläche für das oder für ein sich axial erstreckendes Lagerelement vorgesehen sei, wird an dieser Stelle nochmals darauf verwiesen, dass auf den querschnittsreduzierten Abschnitt, wie eingangs angegeben, mindestens ein, vorzugsweise axiales, das heißt mindestens ein, vorzugsweise sich mit seiner Lagerachse bezogen auf den Stützarm axial erstreckendes, elastisches Lagerelement aufgeschoben ist. Bei einer insoweit vorgesehenen bevorzugten Ausbildungsform der erfindungsgemäßen Pendelstütze sind auf den querschnittsreduzierten Abschnitt des Stützarms aber zwei, sich insbesondere in der axialen Richtung des Stützarms erstreckende, vorzugsweise axial aufeinanderfolgende, elastische Lagerelemente aufgeschoben, welche durch eine in einem diese Lagerelemente umgebenden Lagergehäuse angeordnete Trennwand voneinander getrennt sind. Vorteilhaft ist eines dieser Lagerelemente zwischen der an dem Absatz des Stützarms ausgebildeten Anschlagfläche und der Trennwand und das andere Lagerelement zwischen der Trennwand und der Anschlagscheibe angeordnet. Bevorzugt bilden beide Seiten dieser Trennwand hierbei ebenfalls eine Anschlagfläche für je eines dieser, sich insbesondere in axialer Richtung erstrechenden, Lagerelemente aus. Vorzugsweise ist die jeweils andere Anschlagfläche für eines der Lagerelemente an dem Absatz, das heißt insbesondere am Übergang des Stützarms in seinen querschnittsreduzierten Abschnitt, und für das andere Lagerelement durch die bereits mehrfach angesprochene Anschlagscheibe ausgebildet.

Die Frage, ob auf den querschnittsreduzierten Abschnitt ein oder zwei, durch eine Trennwand voneinander getrennte sich axial erstreckende elastische Lagerelemente, das heißt axiale Komfortbuchsen, aufgeschoben sind, ist dabei insbesondere von eher untergeordneter Bedeutung für die gemäß der Erfindung vorgesehene Formgebung des querschnittsreduzierten Bereichs. Sie spielt aus praktischer Sicht eher eine Rolle bezüglich der Gestaltung und Anordnung des das oder die Lagerelemente umgebenden Lagergehäuses. Letzteres wiederum, nämlich die Gestaltung des Lagergehäuses hängt unter anderem z.B. davon ab, ob das Lagergehäuse, wie vorzugsweise vorgesehen, gleichzeitig als Befestigungsmittel zur Verbindung der Pendelstütze beispielsweise mit dem Chassis eines Fahrzeugs ausgebildet ist. Daher soll nachfolgend auch zumeist lediglich von einem axialen (sich axial erstreckenden) Lagerelement oder - synonym von einer Komfortbuchse gesprochen werden, wobei aber dennoch - sofern nicht ausdrücklich anders angegeben - hiervon stets auch entsprechende Ausbildungsformen mit zwei axialen Lagerelementen umfasst sein sollen. Gleiches gilt für die durch die Patentansprüche charakterisierten Ausbildungsformen der Pendelstütze.

Bei der zur Lösung der Aufgabe vorgeschlagenen Pendelstütze weist der Stützarm in seinem querschnittsreduzierten Abschnitt insbesondere die oder eine nicht rotationssymmetrische, also insbesondere eine von der Kreisform abweichende, Querschnittsfläche auf, wobei dieser Abschnitt vorzugsweise außerdem aus Vollmaterial besteht. Mithin handelt es sich bei dem an den bereits erwähnten Absatz angrenzenden, querschnittsreduzierten Abschnitt des Stützarms, anders als beim Stand der Technik, vorzugsweise nicht um einen hohlzylindrischen Abschnitt. Bevorzugt weist der querschnittsreduzierte Abschnitt über seine gesamte axiale Länge einen Querschnitt aus Vollmaterial auf.

Bei der erfindungsgemäßen Pendelstütze ist daher die bereits erwähnte Anschlagscheibe zur Ausbildung der Anschlagfläche für das elastische oder für ein elastisches, vorzugsweise aus Gummi bestehendes Lagerelement insbesondere nicht mittels einer durch den querschnittsreduzierten Abschnitt hindurchgeführten und in eine Gewindebohrung des angrenzenden Stützarmabschnitts eingeschraubten Metallschraube befestigt. Vielmehr ist die Anschlagscheibe entweder, vorzugsweise ohne Schraube, unmittelbar an dem querschnittsreduzierten Abschnitt, insbesondere selbst, befestigt oder an diesem mit Hilfe unmittelbar an diesem Abschnitt befestigter Mittel oder der Mittel bezüglich oder in der axialen Richtung festgelegt.

Bevorzugt ist das mindestens eine axial auf den querschnittsreduzierten Abschnitt aufgeschobene elastische Lagerelement in der axialen Richtung vorgespannt.

Bei der Querschnittsfläche des querschnittsreduzierten Stützarmabschnitts handelt es sich vorzugsweise um eine 2-zählig drehsymmetrische Fläche mit einer ersten Flächenachse und einer gegenüber dieser ersten Flächenachse verkürzten, zu ihr orthogonal verlaufenden zweiten Flächenachse. Die lange Flächenachse der Querschnittsfläche des querschnittsreduzierten Abschnitts erstreckt sich dabei vorzugsweise über die gesamte Breite des angrenzenden Abschnitts des Stützarms.

Von einer drehsymmetrischen Fläche spricht man beispielsweise, wenn es für eine Drehung der Fläche um ihren Mittelpunkt einen Winkel von kleiner als 360° gibt, bei dem sich die Fläche wieder genauso darstellt wie in der Ausgangslage, die Fläche also trotzdem sie nicht um 360° gedreht wird, wieder ihr ursprüngliches Erscheinungsbild annimmt, das heißt mit dem Abbild ihrer Ausgangsposition zur Deckung kommt. Entsprechend der Anzahl n der Winkel, bei denen die Fläche bei einer Drehung um ihren Mittelpunk dasselbe Erscheinungsbild annimmt, spricht man von einer n-zähligen Drehsymmetrie. Demgemäß weisen beispielsweise ein Quadrat eine 4-zählige Drehsymmetrie (jeweils bei einer Drehung von 90° um den Mittelpunkt ist das Erscheinungsbild der Fläche von dem vor der Drehung nicht mehr unterscheidbar), ein gleichseitiges Dreieck eine 3-zählige Drehsymmetrie und ein Rechteck sowie eine Ellipse eine 2-zählige Drehsymmetrie auf. Ein Sonderfall der Drehsymmetrie stellt die vollständige Drehsymmetrie dar, welche auch als Rotationssymmetrie bezeichnet wird und bei einem Kreis vorliegt, der bei einer um seinen Mittelpunkt ausgeführten Drehung bei jedem beliebigen Drehwinkel stets das gleiche Erscheinungsbild, also das gleiche Aussehen hat.

Bei der erfindungsgemäßen Ausbildung der Pendelstütze liegt aber bei der Querschnittsfläche ihres querschnittsreduzierten Abschnitts die zuletzt angesprochene Rotationssymmetrie insbesondere gerade nicht vor. Vielmehr weist die Querschnittsfläche dieses Abschnitts gemäß einer bevorzugten Ausbildungsform die Form eines Rechtecks auf. Gegenüber einem Kreisquerschnitt weist diese Querschnittsform z.B. eine größere Umfangslänge auf, was vorteilhaft ist im Hinblick auf die im Rahmen der Erfindung favorisierte Methode der Befestigung der Anschlagscheibe. Diese ist nämlich bei einer bevorzugten Ausbildungsform der erfindungsgemäßen Pendelstütze stoffschlüssig an der Stirnseite des in sie hineinragenden freien Endes des querschnittsreduzierten Abschnitts befestigt. Bevorzugt ist die Anschlagscheibe an dem freien axialen Ende des querschnittsreduzierten Abschnitts stoffschlüssig mit dem Stützarm verbunden. Die stoffschlüssige Befestigung der Anschlagscheibe erfolgt hierbei insbesondere durch Schweißen, genauer gesagt z.B. durch das FSW-Verfahren (FSW = Friction Stir Welding), welches auch als Reibrührschweißen bezeichnet wird.

Eine solche stoffschlüssige Verbindung bringt gegenüber der Verbindung mittels einer Schraube auch den Vorteil mit sich, dass erfahrungsgemäß eine Schweißnaht im Fehlerfall im Allgemeinen nicht schlagartig versagt. Durch regelmäßige Inspektionen der Pendelstützen und der über sie hergestellten Koppelstellen kann daher eventuell ein drohendes Versagen möglicherweise bereits im Vorfeld erkannt und dem durch Austausch der Pendelstütze entgegengewirkt werden. Hingegen ist bei Schraubverbindungen häufiger ein schlagartiges Versagen zu verzeichnen, was im Einzelfalle, bezogen auf das bevorzugte Einsatzgebiet der hier betrachteten Pendelstützen im Fahrzeugbau, zu gefährlichen Situationen führen kann.

Mittels des FSW-Schweißverfahrens, bei welchem die Materialien um den eigentlichen Schweißbereich herum nur verhältnismäßig wenig erwärmt werden, wird entlang des Umfangs des querschnittsreduzierten Abschnitts eine diesen mit der auf diesen Abschnitt axial endseitig aufgeschobenen Anschlagscheibe verbindende Schweißnaht gezogen. Nur durch den Einsatz dieses Schweißverfahrens ist es dabei insbesondere gewährleistet, dass das Material des zuvor auf den querschnittsreduzierten Abschnitt des Stützarms aufgeschobenen mindestens einen elastischen (axial orientierten) Lagerelements beim Schweißvorgang nicht geschädigt wird.

Je länger aber die unter Nutzung des zuvor genannten Schweißverfahrens hergestellte Schweißnaht ist, desto belastbarer und damit desto zuverlässiger ist die auf diese Weise zwischen dem Stützarm und der als Anschlagfläche für das Lagerelement dienenden Metallscheibe (Anschlagscheibe) hergestellte Verbindung. Insoweit erweist sich der Übergang von einem Kreisquerschnitt zu einem rechteckigen Querschnitt für den querschnittsreduzierten Abschnitt und die damit verbundene Vergrößerung der Umfangsfläche als Vorteil. Besonders bevorzugt ist es dabei, wenn das Verhältnis zwischen den Kantenlängen des rechteckigen Querschnitts des hinsichtlich der Querschnittsfläche reduzierten Abschnitts, nämlich das Verhältnis zwischen der kurzen und der langen Kante der Querschnittsfläche, ein Viertel oder weniger beträgt, wenn also der querschnittsreduzierte Abschnitt sehr flach ausgebildet wird.

Bevorzugt ist die Anschlagscheibe mittels einer auf dem Umfang des querschnittsreduzierten Abschnitts umlaufenden Schweißnaht an den Stützarm angeschweißt. Vorteilhaft weist der Stützarm in dem querschnittsreduzierten Abschnitt eine rechteckige Querschnittsfläche auf.

Bevorzugt beträgt das Längenverhältnis zwischen der kurzen Flächenachse und der gegenüber dieser längeren Flächenachse der Querschnittsfläche des querschnittsreduzierten Abschnitts des Stützarms, welches bei einer ein Rechteck ausbildenden Querschnittsfläche dem Längenverhältnis der Kantenlängen des Rechtecks entspricht, 1/4 (ein Viertel) oder weniger.

Da bei der erfindungsgemäßen Pendelstütze zur Befestigung der die Anschlagsfläche ausbildenden, am äußeren freien Ende des querschnittsreduzierten Abschnitts angeordneten Metallscheibe (Anschlagscheibe) in diesem Abschnitt eine Durchführung für eine Schraube nicht mehr erforderlich ist, kann dieser Abschnitt ohne Hohlraum, also aus dem Vollmaterial bestehend, ausgebildet werden. Hierdurch ist es wiederum möglich, den Stützarm vorteilhaft als Strangpressteil aus Aluminium herzustellen. Der Stützarm lässt sich so als Leichtbauteil ausformen, ohne dass anschließend Nacharbeiten an diesem erforderlich sind.

Bevorzugt besteht der Stützarm aus stranggepresstem Aluminium.

Ohne das Erfordernis einer axial verlaufenden Durchführung durch den querschnittsreduzierten Abschnitt des Stützarms kommen aber dennoch, abgesehen von dem bereits angesprochenen Schweißverfahren, je nach dem für die Pendelstütze vorgesehenen Einsatzzweck auch andere Befestigungsverfahren oder Verfahren zur Festlegung der Anschlagscheibe in Betracht, auf welche im Zusammenhang mit der Darstellung von Ausführungsbeispielen noch eingegangen werden soll. An dieser Stelle sei lediglich auf die Möglichkeit eines Formschlusses zwischen dem querschnittsreduzierten Abschnitt des Stützarms und der Anschlagscheibe, beispielsweise durch Vernieten, hingewiesen.

Beispielsweise ist die Anschlagscheibe durch Vernieten mit dem die Anschlagscheibe durchragenden freien axialen Ende des querschnittsreduzierten Abschnitts, insbesondere kraftschlüssig, mit dem Stützarm verbunden.

Vorteilhaft weist der Stützarm an einem axialen Ende ein elastisches Lagerelement zur Ausbildung eines Gelenklagers mit einer quer zur axialen Richtung der Längserstreckung des Stützarms verlaufenden Lagerachse auf.

Im Einzelnen weist die erfindungsgemäß ausgebildete Pendelstütze insbesondere auch in Verbindung mit ihrem bevorzugt vorgesehenen Einsatzzweck einer Verbauung in Kraftfahrzeugen zur Koppelung zwischen Fahrzeugchassis und Motor mit Getriebe folgende Vorteile auf.
- Die in dem querschnittsreduzierten Abschnitt ihres Stützarms sehr flach ausgebildete Pendelstütze benötigt in vertikaler Richtung weniger Platz als ein Querschnitt (Querschnittsfläche in Form eines Rechtecks) mit einer Schraubendurchführung. Aufgrund geringer Nebenfederraten verbessert sich die Beweglichkeit der Stütze im Hinblick auf Winkelbewegungen in ±Z-Richtung.
- Da durch den querschnittsreduzierten Abschnitt zur Befestigung der an dessen freien Ende angeordneten Anschlagscheibe keine Schraubenklemmkraft übertragen werden muss, kann dieser Abschnitt, das heißt der Stützarm, auf entsprechend geringere, maximale Bauteillasten ausgelegt werden.
- Der schmale Rechteckquerschnitt des querschnittsreduzierten Abschnitts weist einen deutlich vergrößerten Konturumfang auf als ein kreisrunder Querschnitt (circa doppelt so großen wie ein Kreisquerschnitt gleicher Querschnittsfläche) und kann somit besser stoffschlüssig mit der Anschlagscheibe verbunden werden.
- Die chassisseitige Konstruktion kommt ohne Stahlkomponenten aus, so dass alle Werkstoffe ein spezifisches Gewicht von weniger als 7,85 kg/dm³ haben.
- Die Werkzeugkosten für eine Koppelstange, das heißt den im Aluminium-Extrudier-Verfahren hergestellten Stützarm einer Pendelstütze, betragen nur einen Bruchteil der für die Herstellung von Stangen im Gießverfahren (Kokillengussverfahren) entstehenden.
- Sofern eine stoffschlüssige Verbindung zwischen dem Stützarm und der Anschlagscheibe hergestellt wird, geschieht dies in einem finalen Arbeitsgang bei bereits montierten axialen Lagerelementen. Unabhängig davon macht sich aber an dem Stützarm selbst nach dessen Formgebung keine besondere Nachbearbeitung - wie beispielsweise das Einfügen einer Gewindebohrung - erforderlich.

Nachfolgend sollen mögliche Ausführungsbeispiele der Erfindung anhand von Zeichnungen erläutert werden. Die einzelnen Zeichnungen zeigen:
Fig. 1: eine mögliche Ausbildungsform der erfindungsgemäßen Pendelstütze in einer Seitenansicht,
Fig. 2: die Pendelstütze gemäß Fig. 1 in einer teilweise geschnittenen räumlichen Darstellung,
Fig. 3: die Pendelstütze gemäß Fig. 1 in einem Schnitt entlang der Linie D-D,
Fig. 4: eine weitere mögliche Ausbildungsform der Pendelstütze mit einer alternativen Befestigungsform der Anschlagscheibe,
Fig. 5: eine weitere Alternative für die Befestigung der Anschlagscheibe,
Fig. 6: eine Möglichkeit der Fixierung der Anschlagscheibe durch Festlegung am Stützarm im Wege eines Kraftschlusses,
Fig. 7: eine Pendelstütze nach dem Stand der Technik in einer Seitenansicht,
Fig. 8: die Pendelstütze gemäß Fig. 7 in einem Schnitt entlang der Linie A-A.

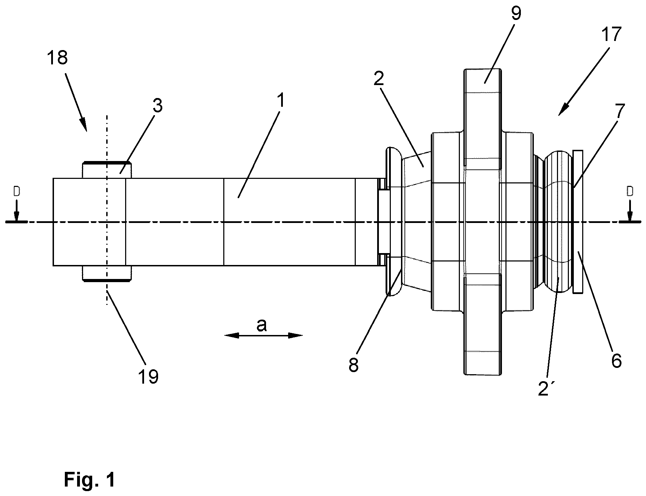

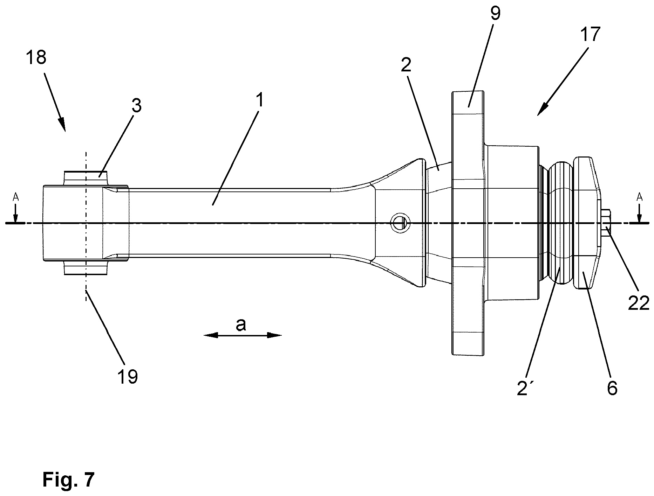

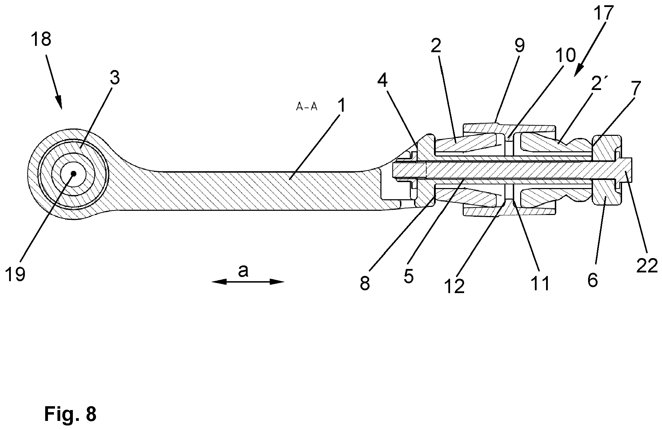

Zunächst soll anhand der Figuren 7 und 8, welche eine Pendelstütze gemäß dem Stand der Technik darstellen, kurz auf den grundsätzlichen Aufbau einer gattungsgemäßen, insoweit mit der Pendelstütze gemäß der Fig. 1 vergleichbaren Pendelstütze eingegangen werden. Demnach handelt es sich bei der Pendelstütze um einen durch ein Profilelement gebildeten Stützarm 1, der an seinen axialen Enden 17, 18 jeweils ein elastisches Lagerelement 2, 2', 3 aufweist, wobei es sich bei dem Lagerelement 2, 2' der einen Seite genaugenommen um zwei sich axial erstreckende elastische Lagerelemente 2, 2' handelt. Die der Längserstreckung der Pendelstütze, genauer gesagt ihres Stützarms 1 entsprechende axiale Richtung a ist in der Figur kenntlich gemacht. Bei einem der vorzugsweise aus Gummi bestehenden Lagerelemente - in der Fig. 7 links dargestellt - handelt es sich um ein Element, durch welches ein Gelenklager 3 mit einer quer zu der axialen Richtung a der Längserstreckung des Stützarms 1 verlaufenden Lagerachse 19 ausgebildet ist. Dies ist in der Fig. 8, welche die Pendelstütze nochmals in einem Schnitt entlang der Linie A-A zeigt, besonders gut zu erkennen.

Auf der anderen Seite, in den Zeichnungen der Figuren 7 und 8 rechts, sind zwei sich axial erstreckende elastische Lagerelemente 2, 2' auf einen hinsichtlich seines Querschnitts 5 reduzierten, nämlich hohlzylindrischen Abschnitt aufgeschoben. Die beiden axialen Lagerelemente sind durch eine in einem sie umgebenden Lagergehäuse 9 angeordnete Trennwand 10 voneinander getrennt. Für das erste Lagerelement 2 ist eine Anschlagfläche 8 an dem Absatz 4 ausgebildet, welchen der Stützarm 1 im Bereich seines Übergangs zu dem querschnittsreduzierten Abschnitt 5 aufweist. Eine zweite Anschlagfläche 12 ist für dieses (erste) Lagerelement 2 durch die Trennwand 10 des Lagergehäuses 9 gebildet. Diese Trennwand 10 bildet gleichzeitig auf ihrer Rückseite, also auf ihrer anderen Seite eine Anschlagfläche 11 für das zweite axiale Lagerelement 2' aus. Eine weitere Anschlagfläche 7 für dieses Lagerelement ist durch ein axial endseitig an dem Stützarm befestigtes scheibenförmiges Metallelement (Anschlagscheibe 6) ausgebildet.

Wie aus den beiden Figuren (Fig. 7 und Fig. 8) ersichtlich, ist die Anschlagscheibe 6 mittels welcher auch die beiden axialen Lagerelemente 2, 2' bezüglich ihrer axialen Lage fixiert und gegebenenfalls vorgespannt werden, an dem Stützarm 1 mittels einer Metallschraube 22 befestigt, die durch eine in dem querschnittsreduzierten Abschnitt 5 des Stützarms 1 ausgebildete Durchführung hindurchgeführt und an dem sich an den Abschnitt 5 anschließenden Abschnitt des Stützarms 1 verschraubt ist. Diese Metallschraube 22 führt bei der Pendelstütze gemäß dem Stand der Technik zu einem vergleichsweise hohen Gewicht. Sie macht es zudem erforderlich, im Nachgang zu der Formgebung des Stützarms 1 in den sich an den Abschnitt 5 anschließenden Abschnitt des Stützarms 1 ein Innengewinde oder eine Ausnehmung mit einer in diese Ausnehmung eingefügten Gewindemutter einzubringen.

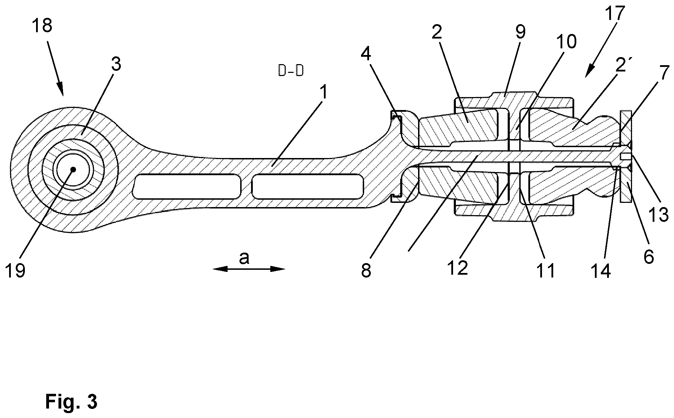

Demgegenüber ist bei der ansonsten mit der Pendelstütze der Figuren 7 und 8 vergleichbaren, in der Fig. 1 gezeigten Ausbildungsform der erfindungsgemäßen Pendelstütze das als Anschlagfläche für eines der beiden (rechts dargestellten) axialen Lagerelemente 2, 2' dienende elastische Metallelement (Anschlagscheibe 6) an dem querschnittsreduzierten Abschnitt 5 des Stützarms 1 stoffschlüssig befestigt, wobei der querschnittsreduzierte Bereich 5 zudem eine nicht rotationssymmetrische Querschnittsform aufweist. Auf eine das Gesamtgewicht der Pendelstütze erhöhende Metallschraube kann aufgrund der stoffschlüssigen Befestigung verzichtet werden, so dass auch eine hohlzylindrische Ausbildung des querschnittsreduzierten Bereichs 5 nicht erforderlich ist und der Stützarm 1 im Wege des Strangpressens aus Aluminium gefertigt werden kann. Der stoffschlüssigen Befestigung der Anschlagscheibe 6 an dem Stützarm 1 kommt es zugute, dass der in die Anschlagscheibe 6 hineinragende querschnittsreduzierte Abschnitt 5 des Stützarms 1 sehr flach mit einer rechteckigen Querschnittsfläche 13 ausgebildet ist, welche gegenüber einer zylindrischen Form, das heißt gegenüber einer kreisförmigen Querschnittsfläche, eine größere Umfangslänge für eine den Stoffschluss herstellende Schweißnaht 14 (siehe Fig. 3) aufweist.

Die Fig. 1 zeigt diese Ausbildungsform der erfindungsgemäßen Pendelstütze in einer Seitenansicht. In dieser Darstellung sind die wesentlichen Elemente der im Hinblick auf das bloße Vorhandensein dieser Elemente - Stützarm 1, elastische Lagerelemente 2, 2', 3 an den axialen Enden 17, 18 des Lagerarms mit axialen Lagerelementen 2, 2' am axialen Ende 17 und einem Gelenklager 3 am axialen Ende 18 sowie Anschlagscheibe 6 - mit dem Stand der Technik vergleichbaren Pendelstütze erkennbar.

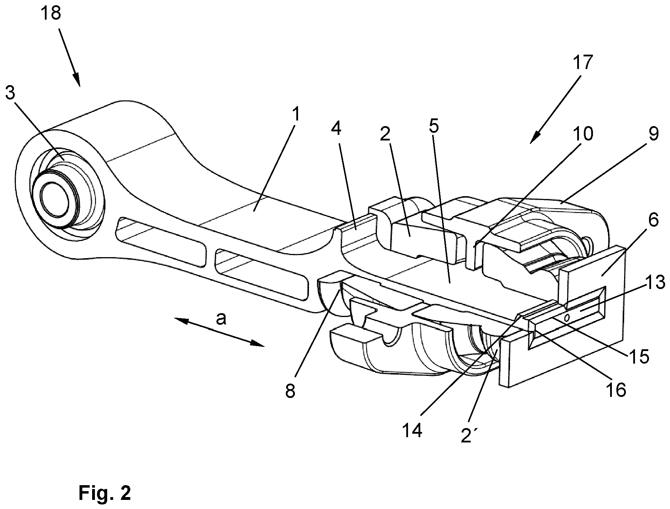

Die Fig. 2 zeigt diese Pendelstütze nochmals in einer teilgeschnittenen räumlichen Darstellung. Hier sind insbesondere der flache querschnittsreduzierte Abschnitt 5 mit seiner rechteckigen Querschnittsfläche 13 und den Flächenachsen 15, 16 sowie das Längenverhältnis dieser Flächenachsen 15, 16 gut erkennbar. Gut zu erkennen ist ferner, dass das die auf den querschnittsreduzierten Abschnitt 5 aufgeschobenen Lagerelemente 2, 2' umgebende Lagergehäuse 9 gleichzeitig als Befestigungsmittel zur chassisseitigen Befestigung der Pendelstütze ausgelegt ist.

Die Fig. 3 zeigt schließlich die Pendelstütze gemäß der Fig. 1 nochmals in einem Schnitt entlang der Linie D-D. Der flache, aus dem Vollmaterial ausgebildete querschnittsreduzierte Abschnitt 5 des Stützarms 1 der erfindungsgemäßen Pendelstütze, wie er insbesondere in den Fig. 2 und 3 besonders gut erkennbar ist, ermöglicht es, den Stützarm 1, anders als bisher üblich, nicht im Wege des Kokillengusses herzustellen, sondern ihn in besonders vorteilhafter Weise als Aluminium-Strangpressteil auszubilden. Darüber hinaus ist die Pendelstütze vergleichbar der des Standes der Technik ausgebildet. Auch bei ihr ist an einem axialen Ende 18 ein radial orientiertes Gelenklager 3 aus Gummi vorhanden, wohingegen der Stützarm 1 an dem anderen axialen Ende 17 wiederum zwei axiale elastische Lagerelemente 2, 2', mit einem ebenfalls aus Gummi bestehenden Lagerkörper, aufweist. Auch bei dieser Pendelstütze sind die beiden axialen Lagerelemente 2, 2' durch die, gleichzeitig Anschlagflächen 11, 12 für beide Lagerelemente 2, 2' ausbildende Trennwand 10 des Lagergehäuses 9 voneinander getrennt. Das Lagergehäuse 9 dient, wie in der teilgeschnittenen räumlichen Darstellung der Fig. 2 ersichtlich, gleichzeitig als Befestigungselement zur Verbindung der mit dem Komfortlager ausgestatteten Pendelstütze mit einem Fahrzeugchassis.

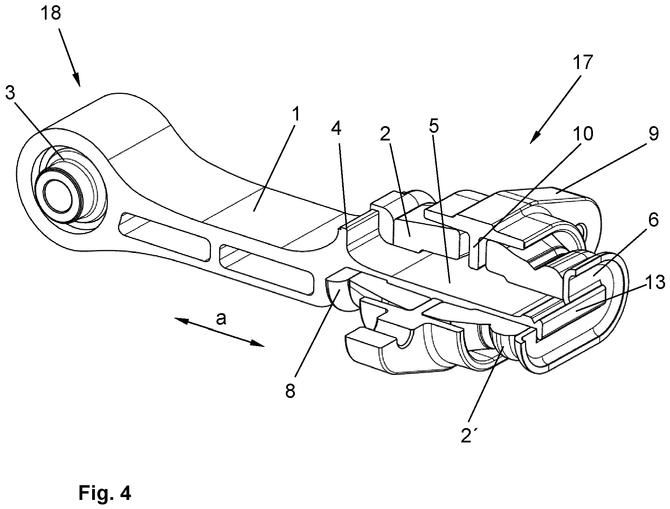

Die Figuren 4 bis 6 zeigen weitere Ausbildungsformen der erfindungsgemäßen Pendelstütze mit einem weitgehend gleichen Aufbau, bei denen jedoch die als Anschlagfläche 7 dienende, axial endseitig angeordnete Anschlagscheibe 6 in alternativer Weise an dem Stützarm 1 befestigt oder fixiert ist. Bei allen drei Ausbildungsformen ragt dabei der querschnittsreduzierte Abschnitt 5 des Stützarms 1 in die Anschlagscheibe 6 hinein oder durch diese hindurch.

Bei der Ausbildungsform gemäß der Fig. 4 ist die Anschlagscheibe 6 formschlüssig mit dem Stützarm 1 verbunden. Hierbei ist die Verbindung durch Vernieten der Teile hergestellt, wobei der querschnittsreduzierte Abschnitt 5 des Stützarms 1 die Anschlagscheibe 6 geringfügig durchragt und in seinem das Metallelement durchragenden Teilabschnitt durch entsprechende Bearbeitung etwas verdickt, zum Beispiel entlang seines Umfangs umgebördelt ist.

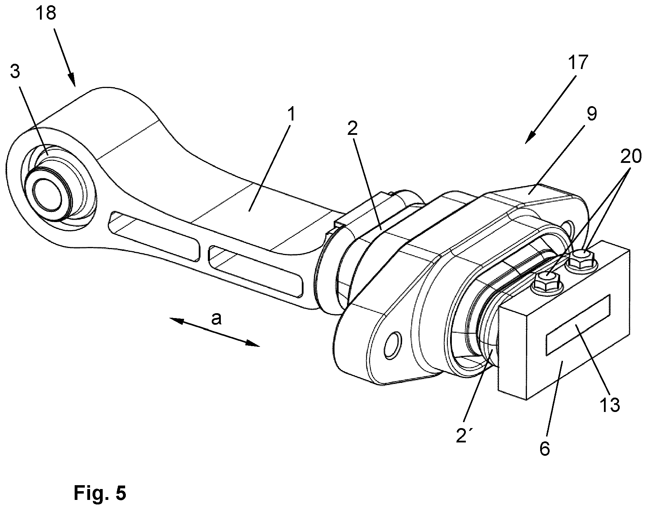

In der Fig. 5 ist die Anschlagscheibe 6, welche hier eine etwas größere Materialstärke aufweist, mittels zweier quer zur Längserstreckung des Stützarms 1 in dessen querschnittsreduzierten Abschnitt 5 hineingeführter Schrauben 20 befestigt.

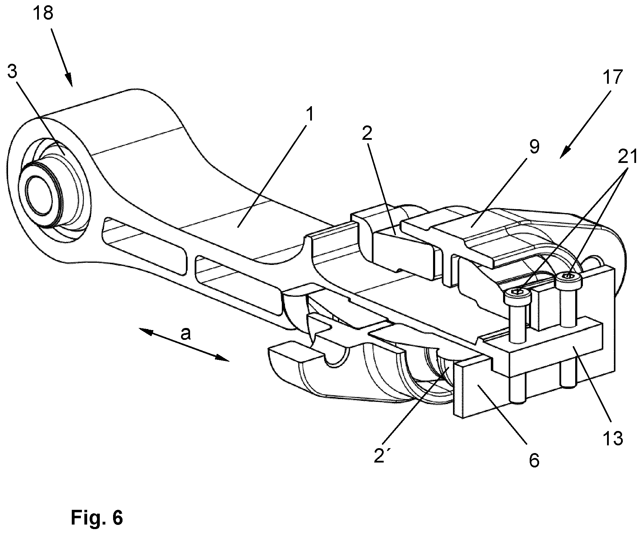

Demgegenüber ist die Anschlagscheibe 6 bei der Ausbildungsform gemäß der Fig. 6 selbst nicht unmittelbar an dem Stützarm 1 befestigt. Sie ist vielmehr an diesem dadurch axial festgelegt, dass sie durch den querschnittsreduzierten Abschnitt 5 des Stützarms 1 durchragt wird und hinter dem scheibenförmigen Metallelement quer zur Erstreckungsrichtung des Stützarms 1 durch diesen als Befestigungsmittel 21 zwei Schrauben oder Nieten hindurchgeführt sind.

Da sich jedoch bei den beiden zuletzt erläuterten, in Fig. 5 und Fig. 6 dargestellten Ausbildungsformen das Gesamtgewicht der Pendelstütze wieder etwas erhöht, sind diese Ausbildungsformen sicherlich speziellen Einsatzzwecken vorbehalten. Insoweit ist davon auszugehen, dass einer stoffschlüssigen Befestigung der Anschlagscheibe 6, also des scheibenförmigen Metallelements, an dem Stützarm 1 in der Praxis im Allgemeinen der Vorzug zu geben sein wird.

### Bezugszeichenliste

1 Stützarm
2, 2' axiales Lagerelement
3 Lagerelement (Gelenklager)
4 Absatz
5 querschnittsreduzierter Abschnitt
6 Anschlagscheibe
7, 8 Anschlagfläche
9 Lagergehäuse
10 Trennwand
11, 12 Anschlagfläche
13 Querschnittsfläche
14 Schweißnaht
15, 16 Flächenachse
17, 18 axiales Ende
19 Lagerachse
20 Befestigungsmittel (Schrauben)
21 Befestigungsmittel
22 Metallschraube

## Patentansprüche

1. Pendelstütze mit einem durch ein Profilelement ausgebildeten, sich in einer seiner Längserstreckung entsprechenden axialen Richtung (a) zwischen zwei axialen Enden (17, 18) erstreckenden Stützarm (1), der an wenigstens einem axialen Ende (17, 18) einen sich an einen Absatz (4) anschließenden Abschnitt (5) mit reduzierter Querschnittsfläche (13) aufweist, auf den mindestens ein, sich in der axialen Richtung (a) zwischen zwei Anschlagflächen (7, 8) erstreckendes elastisches Lagerelement (2, 2') aufgeschoben ist, wobei an dem Absatz (4) eine Anschlagfläche (8) und durch ein, auf der dem Absatz (4) axial gegenüberliegenden Seite des querschnittsreduzierten Abschnitts (5) angeordnetes scheibenförmiges Metallelement eine Anschlagscheibe (6) mit einer Anschlagfläche (7) ausgebildet ist, **dadurch gekennzeichnet, dass** der Stützarm (1) in seinem querschnittsreduzierten Abschnitt (5) eine nicht rotationssymmetrische Querschnittsfläche (13) aufweist und dass die Anschlagscheibe (6) unmittelbar an dem querschnittsreduzierten Abschnitt (5) befestigt oder an diesem mit Hilfe unmittelbar an dem Abschnitt (5) befestigter Mittel (20, 20'; 21, 21') in der axialen Richtung (a) festgelegt ist.

2. Pendelstütze nach Anspruch 1, **dadurch gekennzeichnet, dass** auf den querschnittsreduzierten Abschnitt (5) des Stützarms (1) zwei sich in der axialen Richtung (a) des Stützarms (1) erstreckende elastische Lagerelemente (2, 2') aufgeschoben sind, welche durch eine in einem die Lagerelemente (2, 2') umgebenden Lagergehäuse (9) angeordnete Trennwand (10) voneinander getrennt sind und dass eines dieser Lagerelemente (2) zwischen der an dem Absatz (4) des Stützarms (1) ausgebildeten Anschlagfläche (8) und der Trennwand (10) und das andere Lagerelement (2') zwischen der Trennwand (10) und der Anschlagscheibe (6) angeordnet ist, wobei auch durch beide Seiten der Trennwand (10) eine Anschlagfläche (11, 12) für jeweils eines der beiden sich in axialer Richtung (a) erstreckenden Lagerelemente (2, 2') ausgebildet ist.

3. Pendelstütze nach Anspruch 1 oder 2, **dadurch gekennzeichnet, dass** das mindestens eine axial auf den querschnittsreduzierten Abschnitt (5) aufgeschobene elastische Lagerelement (2, 2') in der axialen Richtung (a) vorgespannt ist.

4. Pendelstütze nach Anspruch 1 oder 2, **dadurch gekennzeichnet, dass** der Stützarm (1) an einem axialen Ende (18) ein elastisches Lagerelement zur Ausbildung eines Gelenklagers (3) mit einer quer zur axialen Richtung (a) der Längserstreckung des Stützarms (1) verlaufenden Lagerachse (19) aufweist.

5. Pendelstütze nach Anspruch 1 oder 4, **dadurch gekennzeichnet, dass** der Stützarm (1) in dem querschnittsreduzierten Abschnitt (5) eine 2-zählig drehsymmetrische Querschnittsfläche (13) mit einer ersten Flächenachse (15) und einer gegenüber der ersten Flächenachse (15) verkürzten, zu ihr orthogonal verlaufenden zweiten Flächenachse (16) aufweist.

6. Pendelstütze nach Anspruch 5, **dadurch gekennzeichnet, dass** der Stützarm (1) in dem querschnittsreduzierten Abschnitt (5) eine rechteckige Querschnittsfläche (13) aufweist.

7. Pendelstütze nach Anspruch 5 oder 6, **dadurch gekennzeichnet, dass** das Längenverhältnis zwischen der kurzen Flächenachse (16) und der gegenüber dieser längeren Flächenachse (15) der Querschnittsfläche (13) des querschnittsreduzierten Abschnitts (5) des Stützarms (1), welches bei einer ein Rechteck ausbildenden Querschnittsfläche dem Längenverhältnis der Kantenlängen des Rechtecks entspricht, 1/4 oder weniger beträgt.

8. Pendelstütze nach Anspruch 1 oder 6, **dadurch gekennzeichnet, dass** der querschnittsreduzierte Abschnitt (5) über seine gesamte axiale Länge einen Querschnitt aus Vollmaterial aufweist.

9. Pendelstütze nach Anspruch 1 oder 6, **dadurch gekennzeichnet, dass** die Anschlagscheibe (6) an dem freien axialen Ende des querschnittsreduzierten Abschnitts (5) stoffschlüssig mit dem Stützarm (1) verbunden ist.

10. Pendelstütze nach Anspruch 9, **dadurch gekennzeichnet, dass** die Anschlagscheibe (6) mittels einer auf dem Umfang des querschnittsreduzierten Abschnitts (5) umlaufenden Schweißnaht (14) an den Stützarm (1) angeschweißt ist.

11. Pendelstütze nach Anspruch 1 oder 6, **dadurch gekennzeichnet, dass** die Anschlagscheibe (6) durch Vernieten mit dem die Anschlagscheibe (6) durchragenden freien axialen Ende des querschnittsreduzierten Abschnitts (5) kraftschlüssig mit dem Stützarm verbunden ist.

12. Pendelstütze nach einem der Ansprüche 1 bis 11, **dadurch gekennzeichnet, dass** der Stützarm (1) aus stranggepresstem Aluminium besteht.

## Claims

1. Pendulum support with a support arm (1) formed by a profile element, extending in an axial direction (a) corresponding to its longitudinal extension between two axial ends (17, 18), which has, at at least one axial end (17, 18), a section (5) adjoining a shoulder (4) with a reduced cross-sectional area (13), onto which at least one elastic bearing element (2, 2') extending in the axial direction (a) between two stop surfaces (7, 8) is pushed, wherein a stop surface (8) is formed at the shoulder (4) and a stop washer (6) with a stop surface (7) is formed by a disc-shaped metal element arranged on the axially opposite side of the cross-sectionally reduced section (5) to the shoulder (4), **characterised in that** the support arm (1) has a non-rotationally symmetrical cross-sectional surface (13) in its cross-sectionally reduced section (5) and that the stop washer (6) is directly attached to the cross-sectionally reduced section (5) or is fixed to it in the axial direction (a) by means of means (20, 20', 21, 21') attached directly to the section (5).

2. Pendulum support according to claim 1, **characterised in that** two elastic bearing elements (2, 2') extending in the axial direction (a) of the support arm (1) are pushed onto the cross-sectionally reduced section (5) of the support arm (1), which are separated from each other by a partition (10) arranged in a bearing housing (9) surrounding the bearing elements (2, 2') and **in that** one of these bearing elements (2) is arranged between the stop surface (8) formed on the shoulder (4) of the support arm (1) and the partition (10) and the other bearing element (2') is arranged between the partition (10) and the stop washer (6), wherein a stop surface (11, 12) is also formed by both sides of the partition (10) for each of the two bearing elements (2, 2') extending in the axial direction (a).

3. Pendulum support according to claim 1 or 2, **characterised in that** the at least one elastic bearing element (2, 2') pushed axially onto the cross-sectionally reduced section (5) is pretensioned in the axial direction (a).

4. Pendulum support according to claim 1 or 2, **characterised in that** the support arm (1) has, at an axial end (18), an elastic bearing element for forming a joint bearing (3) with a bearing axis (19) running transversely to the axial direction (a) of the longitudinal extension of the support arm (1).

5. Pendulum support according to claim 1 or 4, **characterised in that** the support arm (1) in the cross-sectionally reduced section (5) has a 2-fold rotationally symmetrical cross-sectional surface (13) with a first surface axis (15) and a second surface axis (16) shortened relative to the first surface axis (15), running orthogonally thereto.

6. Pendulum support according to claim 5, **characterised in that** the support arm (1) has a rectangular cross-sectional area (13) in the cross-sectionally reduced section (5).

7. Pendulum support according to claim 5 or 6, **characterised in that** the length ratio between the short surface axis (16) and its counterpart the longer surface axis (15) of the cross-sectional area (13) of the cross-sectionally reduced section (5) of the support arm (1), which corresponds to the length ratio of the edge lengths of the rectangle in the case of a cross-sectional area forming a rectangle, is 1/4 or less.

8. Pendulum support according to claim 1 or 6, **characterised in that** the cross-sectionally reduced section (5) has a cross-section made of solid material over its entire axial length.

9. Pendulum support according to claim 1 or 6, **characterised in that** the stop washer (6) is integrally connected to the support arm (1) at the free axial end of the cross-sectionally reduced section (5).

10. Pendulum support according to claim 9, **characterised in that** the stop washer (6) is welded to the support arm (1) by means of a circumferential weld seam (14) on the circumference of the cross-sectionally reduced section (5).

11. Pendulum support according to claim 1 or 6, **characterised in that** the stop washer (6) is rigidly connected to the support arm by riveting with the free axial end of the cross-sectionally reduced section (5) protruding through the stop washer (6).

12. Pendulum support according to any one of claims 1 to 11, **characterised in that** the support arm (1) is made from extruded aluminium.

## Revendications

1. Support pendulaire avec un bras de support (1) formé par un élément profilé, s'étendant dans une direction axiale (a) correspondant à son extension longitudinale entre deux extrémités axiales (17, 18), qui présente à au moins une extrémité axiale (17, 18) une partie (5) à surface de section transversale (13) réduite se raccordant à un talon (4), sur laquelle est poussé au moins un élément de palier (2, 2') élastique s'étendant dans la direction axiale (a) entre deux surfaces de butée (7, 8), dans lequel une surface de butée (8) est formée sur le talon (4) et une rondelle de butée (6) avec une surface de butée (7) est formée par un élément métallique en forme de rondelle disposé sur le côté de la partie (5) à section transversale réduite opposé axialement au talon (4), **caractérisé en ce que** le bras de support (1) présente dans sa partie (5) à section transversale réduite une surface de section transversale (13) non symétrique en rotation et **en ce que** la rondelle de butée (6) est fixée directement sur la partie (5) à section transversale réduite ou immobilisée sur celle-ci dans la direction axiale (a) à l'aide de moyens (20, 20' ; 21, 21') fixés directement sur la partie (5).

2. Support pendulaire selon la revendication 1, **caractérisé en ce que** deux éléments de palier (2, 2') élastiques s'étendant dans la direction axiale (a) du bras de support (1) sont poussés sur la partie (5) à section transversale réduite du bras de support (1), lesquels sont séparés l'un de l'autre par une paroi de séparation (10) disposée dans un boîtier de palier (9) entourant les éléments de palier (2, 2'), et **en ce que** l'un de ces éléments de palier (2) est disposé entre la surface de butée (8) formée sur le talon (4) du bras de support (1) et la paroi de séparation (10) et l'autre élément de palier (2') est disposé entre la paroi de séparation (10) et la rondelle de butée (6), dans lequel une surface de butée (11, 12) est également formée par les deux côtés de la paroi de séparation (10) pour respectivement l'un des deux éléments de palier (2, 2') s'étendant dans la direction axiale (a).

3. Support pendulaire selon la revendication 1 ou 2, **caractérisé en ce que** l'au moins un élément de palier (2, 2') élastique poussé axialement sur la partie (5) à section transversale réduite est précontraint dans la direction axiale (a).

4. Support pendulaire selon la revendication 1 ou 2, **caractérisé en ce que** le bras de support (1) présente à une extrémité axiale (18) un élément de palier élastique pour former un palier à rotule (3) avec un axe de palier (19) s'étendant transversalement par rapport à la direction axiale (a) de l'extension longitudinale du bras de support (1).

5. Support pendulaire selon la revendication 1 ou 4, **caractérisé en ce que** le bras de support (1) présente dans la partie (5) à section transversale réduite une surface de section transversale (13) à symétrie de rotation à 180° avec un premier axe de surface (15) et un deuxième axe de surface (16) raccourci par rapport au premier axe de surface (15) et s'étendant orthogonalement à celui-ci.

6. Support pendulaire selon la revendication 5, **caractérisé en ce que** le bras de support (1) présente une surface de section transversale (13) rectangulaire dans la partie (5) à section transversale réduite.

7. Support pendulaire selon la revendication 5 ou 6, **caractérisé en ce que** le rapport de longueur entre l'axe de surface (16) court et l'axe de surface (15) plus long par rapport à celui-ci de la surface de section transversale (13) de la partie (5) à section transversale réduite du bras de support (1), lequel correspond, pour une surface de section transversale formant un rectangle, au rapport de longueur des longueurs des arêtes du rectangle, est de 1/4 ou moins.

8. Support pendulaire selon la revendication 1 ou 6, **caractérisé en ce que** la partie (5) à section transversale réduite présente une section transversale en matériau plein sur toute sa longueur axiale.

9. Support pendulaire selon la revendication 1 ou 6, **caractérisé en ce que** la rondelle de butée (6) est reliée au bras de support (1) par liaison de matière à l'extrémité axiale libre de la partie (5) à section transversale réduite.

10. Support pendulaire selon la revendication 9, **caractérisé en ce que** la rondelle de butée (6) est soudée au bras de support (1) au moyen d'un cordon de soudure (14) faisant le tour de la périphérie de la partie (5) à section transversale réduite.

11. Support pendulaire selon la revendication 1 ou 6, **caractérisé en ce que** la rondelle de butée (6) est reliée à force au bras de support par rivetage avec l'extrémité axiale libre de la partie (5) à section transversale réduite traversant la rondelle de butée (6).

12. Support pendulaire selon l'une quelconque des revendications 1 à 11, **caractérisé en ce que** le bras de support (1) est constitué d'aluminium extrudé.
